# EUROPÄISCHE PATENTSCHRIFT

(11) **EP 2 466 145 B1**
(45) Veröffentlichungstag und Bekanntmachung des Hinweises auf die Patenterteilung: **13.12.2017**
(21) Anmeldenummer: 11008600.6
(22) Anmeldetag: 27.10.2011
(51) Int. Cl.: F04D 19/04, F04D 27/00, F04D 27/02

(54) **Verfahren zum Belüften einer Vakuumpumpe and Anordnung mit einer Vakuumpumpe**
Method for ventilating a vacuum pump and assembly with a vacuum pump
Procédé d'aération d'une pompe à vide et agencement doté d'une pompe à vide

(30) Priorität: 17.12.2010 DE 102010055058
(43) Veröffentlichungstag der Anmeldung: 20.06.2012
(73) Patentinhaber: Pfeiffer Vacuum GmbH, 35614 Aßlar (DE)
(72) Erfinder: Böttcher, Jochen, 35394 Gießen (DE); Koch, Bernhard, 35799 Merenberg (DE)
(74) Vertreter: Manitz Finsterwald Patentanwälte PartmbB

(56) Entgegenhaltungen:
- EP-A1- 0 684 382
- EP-A1- 1 739 308
- EP-A2- 2 053 249
- JP-A- H03 115 796
- JP-A- 2001 207 991
- JP-Y2- H 018 714

## Beschreibung

Die Erfindung betrifft ein Verfahren zum Belüften einer Vakuumpumpe mit schnelldrehendem Rotor nach dem Oberbegriff des Anspruchs 1 und eine Anordnung mit einer Vakuumpumpe mit schnelldrehendem Rotor nach dem Oberbegriff des Anspruchs 9.

Vakuumpumpen mit schnelldrehenden Rotoren, insbesondere Turbomolekularpumpen, haben sich in vielen industriellen Bereichen zur Erzeugung von Hochvakuum bewährt. Aufgrund der sehr schnellen Drehung ihres Rotors, dessen Schaufeln sich etwa mit Schallgeschwindigkeit bewegen, werden sehr tiefe Vakua auch für leichte Gase erreicht.

In einigen Anwendungen ist es notwendig, Gas in die aus Vakuumpumpe und Rezipienten geschaffene Anordnung einzulassen und den Gasdruck innerhalb dieser Anordnung zu erhöhen, wobei sich die Drehung des Rotors verringert. Der Zieldruck kann, muss aber nicht, Atmosphärendruck sein. Auch beim Ausschalten der Turbomolekularpumpe muss der Rotor aus der schnellen Drehung zum Stillstand gebracht werden. In der Regel geschieht dies, indem der Antrieb ausgeschaltet und über ein so genanntes Flutventil Gas in die Turbomolekularpumpe eingelassen wird. Diese Drehzahlverringerung bei Einlassen von Gas wird als "Fluten" oder auch "Belüften" bezeichnet. Das Gas bremst über die Gasreibung den Rotor ab, wobei der Bremseffekt von der eingelassenen Gasmenge und anderen Parametern abhängt. Zu diesen Parametern gehören beispielsweise die Vorvakuumverhältnisse, die gepumpte Gasart, die Pumpen- und die Rezipientengröße sowie deren Größenverhältnis. Die Schwierigkeiten beim Belüften lassen sich anhand des Wunsches nach einer möglichst kurzen Zeit bis zum Stillstand erläutern. Dieser Wunsch erweist sich als Herausforderung, denn hier gilt es einen Kompromiss zwischen zwei Zuständen zu finden: wird wenig Gas eingelassen, dauert es sehr lange, bis der Rotor zum Stillstand kommt. Dies bedeutet auch, dass der Rotor lange für das Durchlaufen einzelner Frequenzfenster der Drehfrequenz benötigt. Dies kann zur Resonanzanregung führen. Wird viel Gas eingelassen, bremst der Rotor zwar schneller ab. Jedoch besteht die Gefahr, dass die dann auftretenden aerodynamischen Kräfte eine zu hohe Kraft auf die Lagerung des Rotors ausüben und diese schädigen. Es kann bei magnetgelagerten Pumpen zu einer starken Belastung und Verschleiß der Schutzlager kommen. Schlimmstenfalls kommt es gar zu einem Kontakt von Rotor und Stator.

Verfahren zum Ansteuern des Flutventils sind im Stand der Technik bekannt.

So schlägt die EP 0 467 148 vor, einen Pumpenparameter zu überwachen und davon abhängig die Durchflussmenge zu stellen. Als Pumpenparameter dienen hier die auf den Rotor einwirkenden Kräfte, welche mittels eines aktiven axialen Magnetlagers bestimmt werden. Für magnetgelagerte Turbomolekularpumpen ist dies ein kostengünstiger und vorteilhafter Weg. Bei passiv gelagerten Turbomolekularpumpen bedeutet er jedoch einen erhöhten technischen Aufwand in Form von Kraftsensoren und zugehöriger Elektronik.

Durch die EP 1 739 308 ist bekannt, die Durchflussmenge des Flutventils abhängig von der Drehzahlabnahme während des Flutprozesses selbst zu regeln. Ein Nachteil ist hier, dass der Benutzer nicht in den Flutprozess eingreifen kann und sich vollständig auf die Richtigkeit der Drehzahlgrenzen und -parameter im Steuergerät verlassen muss. Bei einem Austausch des Steuergeräts ist dies nicht selbstverständlich. Zudem muss eine vergleichsweise schnelle Mess-, Auswerte und Regelelekronik vorgesehen werden, was entsprechende Herstellkosten nach sich zieht. Außerdem kann es zu unvorhersagbarem Verhalten kommen, d.h. die Flutdauer ungeplant zu- oder abnehmen.

Weiterhin ist aus EP 2 053 249 A2 bekannt, vor dem eigentlichen Flutvorgang testweise Gas in die Pumpe einzulassen und dabei eine Betriebsgröße der Turbomolekularpumpe zu überwachen. Anhand dieser Überwachung wird dann ein Flutparametersatz ausgewählt. Es kann sein, dass der Benutzer der Turbomolekularpumpe diesen Testlauf aus prozesstechnischen Gründen nicht zulassen kann.

Ein Verfahren gemäß dem Oberbegriff des Anspruchs 1 ist aus der JP 2001 20 799 1 A bekannt.

Es ist eine Aufgabe der Erfindung, ein Verfahren und eine Anordnung vorzustellen, die das schnelle Belüften einer Vakuumpumpe mit schnelldrehendem Rotor ermöglichen.

Diese Aufgabe wird gelöst durch ein Verfahren mit den Merkmalen des Anspruchs 1 und einer Anordnung mit den Merkmalen des Anspruchs 9. Die abhängigen Ansprüche 2 bis 8 und 10 bis 13 geben vorteilhafte Weiterbildungen an.

Für ein Verfahren zum Belüften einer Vakuumpumpe mit schnelldrehendem Rotor durch Einlassen eines Gases wird vorgeschlagen, dass unter Bewertung einer Zeitmessung, in welcher während zumindest eines Belüftungsvorgangs die Zeitspanne für eine durch das eingelassene Gas bewirkte Drehzahlverringung von einem ersten auf einen zweiten Wert ermittelt wird, die Durchflussmenge einer wenigstens ein Flutventil umfassenden Ventilanordnung für die Durchführung zumindest eines nachfolgenden Belüftungsvorgangs eingestellt wird. Somit wird eine Zeitmessung während eines Belüftungsvorgangs als Grundlage für die Durchführung der nachfolgenden Belüftungsvorgänge genommen. Die geschilderten Probleme, beispielsweise die schlechte Vorhersagbarkeit, des Regelns während des Belüftens werden vermieden. Trotzdem erfolgt eine Verkürzung der für das Belüften notwendigen Zeit unter Berücksichtigung der tatsächlichen Gegebenheiten, beispielsweise des Volumens von Rezipienten und Rohrleitungen zwischen Pumpe und Rezipient. Das Verfahren ist sicher, da werksseitig der schlimmste anzunehmende Belüftungsvorgang, der bei blindgeflanschtem Pumpeneinlass angenommen wird, für die Starteinstellungen benutzt werden kann. Ein weiterer Vorteil ist, dass das Verfahren selbsttätig lernend ablaufen kann, so dass das Belüften nach Durchführen mehrere Belüftungsvorgänge und ohne Eingreifen des Benutzers optimal an die Bedingungen angepasst wird. Die Durchflussmenge der Ventilanordnung kann durch Öffnen oder Schließen von einem oder mehreren Ventilen geschehen. Alternativ können auch der Leitwert oder eine Taktung des getakteten Öffnens verändert werden.

Das Verfahren kann kostengünstig umgesetzt werden, da lediglich Mittel zur Zeitmessung, beispielsweise zwischen zwei Drehzahlpunkten, Mittel zum Vergleichen des Messwerts mit wenigstens einem Referenzwert und eine Ventilsteuerung, die die Durchflussmenge stellen kann, benutzt werden.

Weiterbildungen des Verfahrens und der Vorrichtung umfassen unter anderem Schritte nach den Ansprüchen 3 und 4 sowie Mittel nach Anspruch 13, die dem Benutzer erlauben, die Startbedingungen an die Gegebenheiten seines Systems anzupassen und so das Einstellen der besten Belüftungsparameter zu beschleunigen. Das Setzen der Startbedingungen kann beispielsweise durch Wählen von Geschwindigkeitsstufen, denkbar sind "schnell", "mittel", "langsam", oder des zu evakuierenden Volumens erfolgen. Dieses Volumen kann dabei als physikalisches Volumen oder als Volumenbereich angegeben sein.

Um Einschwingvorgänge und Schwankungen, insbesondere nach Erreichen eines günstigen Wertes, in der Zeit für das Belüften zu verhindern, kann eine Glättung durch statistische Auswertung mehrerer Zeitmessungen erfolgen, beispielsweise durch Mittelung.

Änderung der Taktung bei getaktetem Ansteuern des Flutventils oder Ändern des Leitwerts des Flutventils sind im Hinblick auf die Vorrichtung kostengünstige und im Hinblick auf das Verfahren leicht umsetzbare Wege, die Durchflussmenge des Flutventils anzupassen.

An Hand eines Ausführungsbeispieles und dessen Weiterbildungen soll die Erfindung näher erläutert und die Darstellung ihrer Vorteile vertieft werden.
Es zeigen:
- Fig. 1:: Schematische Darstellung, teilweise im Schnitt, durch eine Anordnung mit Turbomolekularpumpe;
- Fig. 2:: Zeitlicher Verlauf der Drehzahl während eines Belüftungsvorgangs;
- Fig. 3:: Öffnungsgrad des Ventils.

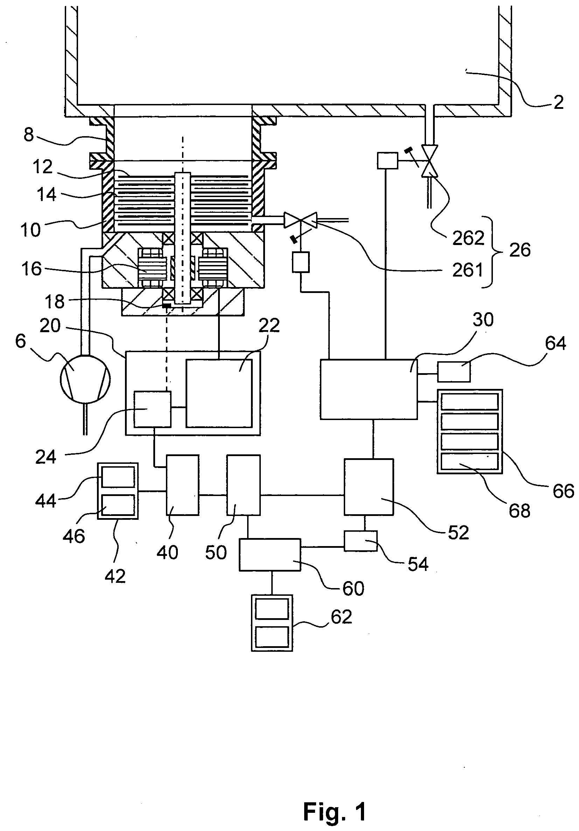

Es zeigt Fig. 1 eine schematische und teilweise geschnitte Darstellung einer Anordnung mit einem Rezipienten 2 und einer Turbomolekularpumpe 10 als Beispiel für eine Vakuumpumpe mit schnelldrehendem Rotor. Die Turbomolekularpumpe saugt Gas aus dem Rezipienten an, verdichtet es und übergibt es an eine Vorvakuumpumpe 6, die gegen Atmosphäre ausstößt. Der Flansch der Turbomolekularpumpe kann direkt an den Kammerflansch angeschraubt sein. Alternativ kann, wie dargestellt, eine Rohrleitung 8 zwischen Rezipienten und Turbomolekularpumpe vorgesehen sein, wodurch das zu evakuierende Volumen erhöht wird. Weiterhin ist es denkbar Ventile, beispielsweise Schieberventile, und Filter zwischen Rezipienten und Turbomolekularpumpe vorzusehen.

Eine Motorsteuerung 20 enthält eine Bestromungsschaltung 22 welche die Antriebsspulen 16 der Turbomolekularpumpe bestromt. Hierdurch wird die Drehung des Rotors 12 erzeugt. Das Zusammenwirken von drehendem Rotor 12 und Stator 14 erzeugt die Pumpwirkung.

Eine Ventilanordnung 26 erlaubt es, Gas in die Anordnung einzulassen. Ein Flutventil 261 ist derart an der Turbomolukarpumpe angebracht, das bei geöffnetem Flutventil Gas in die Turbomolekularpumpe eingelassen wird. Die Ventilanordnung umfasst weiterhin ein zweites Flutventil 262, welches am Rezipienten angeordnet ist, so dass durch Öffnen dieses Ventils Gas in den Rezipienten eingelassen werden kann. Eine Ventilsteuerung 30 steuert die Öffnung der Flutventile 261 und 262. Die Ventilanordnung muss nicht zwingend zwei Ventile umfassen. Je nach Bedingungen, beispielsweise bei einem kleinen Rezipienten, kann ein einzelnes Flutventil ausreichen. Bei Rezipienten mit größerem Rauminhalt sind mehrere Ventile von Vorteil. Zudem können auch mehrere Ventile an der Turbomolekularpumpe angeordnet sein. Die Ventilsteuerung kann so ausgelegt sein, dass sie die Flutventile zeitversetzt öffnet, so dass die Durchflussmenge nach und nach durch Öffnen zusätzlicher Ventile erhöht wird. Durch unterschiedliche Ventile können in einer Weiterbildung unterschiedliche Gasarten in die Anordnung eingelassen werden.

Die Motorsteuerung umfasst eine Frequenzerkennung 24, welche die Drehfrequenz des Rotors bestimmt. Es können direkte Messverfahren zum Einsatz kommen, beispielsweise mittels Sensoren 18, die als Hallsensoren ausgeführt sein können. Alternativ kann der Antrieb sensorlos ausgeführt sein und die Drehfrequenz beispielsweise durch Messung der in den Antriebsspulen induzierten Gegen-EMK bestimmt werden.

Die Anordnung umfasst weiterhin einen Frequenzvergleicher 40. Dieser ist mit der Frequenzerkennung verbunden, so dass ihm ein die Drehfrequenz repräsentierender Wert zugeführt wird. Der Frequenzvergleicher ist zudem mit einem Drehzahlspeicher 42 verbunden, aus dem Drehfrequenzschwellwerte ausgelesen werden können, insbesondere ein oberer Frequenzschwellwert 44 und ein unterer Frequenzschwellwert 46. Der Frequenzvergleicher vergleicht den aus der Frequenzerkennung zugeführten Wert mit den Frequenzschwellwerten und gibt bei Erreichen ein Signal an den Zeitmesser 50 ab.
Der Zeitmesser misst die zwischen dem oberen und unteren Frequenzschwellwert vergehende Zeit. Er ist mit einem Zeitvergleicher 52 verbunden, welcher den vom Zeitmesser übermittelten Zeitwert mit einem Zeitvergleichswert 54 vergleicht.
Der Zeitvergleicher ist mit der Ventilsteuerung verbunden, so dass diese die Durchflussmenge einer wenigstens ein Flutventil umfassenden Ventilanordnung abhängig vom Vergleichsergebnis einstellen kann.
In einer Weiterbildung ist eine Berechnungseinheit 60 mit dem Zeitmesser verbunden. Diese übernimmt Zeitwerte vom Zeitmesser, legt sie in einem Zeitwertspeicher 62 ab und kann sie verarbeiten, um den verarbeiteten Wert dann als Referenzwert 54 dem Zeitvergleicher zur Verfügung zu stellen. Die Verarbeitung kann beispielsweise eine Mittelung sein.
Ein mit der Ventilsteuerung verbundenes Bedienelement 64 erlaubt dem Benutzer, die Ansteuerung des Flutventils einzustellen, beispielsweise indem er einen Parametersatz 68, der einen oder mehrere Parameter enthalten kann, aus dem Parameterspeicher 66 auswählt. Diese Auswahl kann über einen Wählschalter, ein Eingabefeld oder eine Schnittstelle erfolgen.
Nachfolgend soll das Verfahren und die Wirkung einiger Vorrichtungsmerkmale näher erläutert werden.

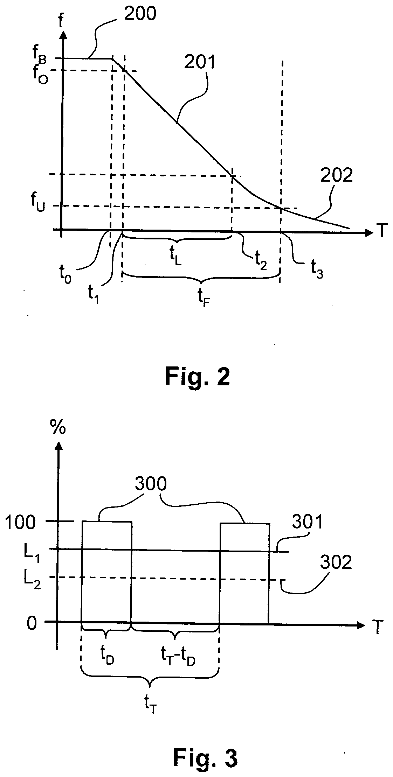

In Fig. 2 ist der Frequenzverlauf f der Drehung des Rotors über der Zeit T bei einem Belüftungsvorgang dargestellt. Zunächst dreht sich der Rotor bei bestromten Antriebsspulen mit der Betriebsfrequenz f_{B}, wobei sich ein weitgehend konstanter Frequenzverlauf 200 ergibt. Zum Zeitpunkt t₀ wird der Belüftungsvorgang gestartet. Die Bestromung der Antriebsspulen wird gstoppt und die Ventilsteuerung öffnet das Flutventil gemäß einem mittels Bedienelement voreingestellten Parameter. Gas tritt in die Turbomolekularpumpe ein und bremst über die Gasreibung den Rotor ab, wobei sich im gewählten Beispiel zunächst eine Phase 201 mit nahezu linearem Abfall der Drehfrequenz ergibt. Der sich tatsächlich ergebende Verlauf muss jedoch nicht zwingend linear sein.

Die Drehfrequenz wird kontinuierlich oder nach einem vorbestimmtem Zeitraster an den Frequenzvergleicher übergeben.

Zum Zeitpunkt t₁ erreicht die Drehfrequenz den Wert des oberen Frequenzschwellwerts f_{O}. Der Frequenzvergleicher erkennt dies und übermittelt an den Zeitmesser ein Startsignal, so dass die Zeitmessung gestartet wird. Die Drehfrequenz nimmt weiter ab, wobei das lineare Zeitfenster t_{L} mit dem linearen Drehfrequenzabfall zum Zeitpunkt t₂ endet.

Zum Zeitpunkt t₃ erreicht die Drehfrequenz den unteren Frequenzschwellwert f_{U}, was durch den Frequenzvergleicher erkannt wird. Dieser gibt ein Stoppsignal an den Zeitmesser aus, so dass die Zeitmessung beendet wird. Die gemessene Flutzeit t_{F} beziehungsweise ein diese repräsentierender Zeitwert wird an den Zeitvergleicher 52 übergeben.

Die Frequenzschwellwerte werden nach den Gegebenheiten der Anordnung festgelegt, insbesondere von Vakuumpumpe und Ventilanordnung.

Der obere Frequenzschwellwert kann bei voller Drehzahl liegen. Es ist jedoch vorteilhaft, den oberen Frequenzschwellwert tiefer anzusetzen, da es auch im normalen Betrieb einer Turbomolekularpumpe zu Drehzahlabsenkungen kommen kann. Außerdem kann es sinnvoll sein, nach Ausschalten des Antriebs einige Zeit zu warten, bis Schieber oder andere Bauteile an der Anlage geschlossen sind. In solch einer Zeit fällt die Drehzahl ebenfalls ab. Durch einen einige Prozent unterhalb der Nenndrehzahl liegenden Schwellwert können diese Effekte aus der Zeitmessung ausgeklammert werden.

Der untere Frequenzschwellwert ist so gewählt, dass sich eine repräsentative und vergleichbare Zeitspanne ergibt. Es gibt einige Gesichtspunkte bei der Wahl dieses Schwellwertes. So ist es beispielsweise möglich, ab einer Grenzdrehzahl die Ventilanordnung vollständig zu öffnen. Diese hängt unter anderem von der mechanischen Belastbarkeit der Pumpe ab. Durch einen flachen Verlauf 202 der Drehfrequenz-über-Zeit-Kurve ergibt sich durch Drehzahlschwankungen und Drehzahlmessfehler ein höherer Fehler in der Zeitmessung. Dies muss berücksichtigt werden.

Gibt es einen nahezu linearen Verlauf wie in Fig. 2 dargestellt, ist es vorteilhaft, den unteren Frequenzschwellwert so zu legen, dass t₂ und t₃ zusammenfallen, der Frequenzschwellwert also am Ende des linearen Bereichs liegt.

Nach Beenden des Belüftens und der Zeitmessung wird die gemessene Flutzeit mit einem Referenzwert verglichen und das Vergleichsergebnis bewertet. Hierzu wird die Flutzeit beziehungsweise einen diesen repräsentierenden Zeitwert an den Zeitvergleicher 52 übergeben und dort mit einem Referenzwert 54 unter Bildung eines Vergleichsergebnisses verglichen. Dieser Referenzwert kann beispielsweise für den mit der Turbomolekularpumpe schnellstmöglichen Flutvorgang stehen. Ist die gemessene Zeit größer als der Referenzwert, bedeutet dieses Vergleichsergebnis, dass der Zeitvergleicher ein Flutbeschleunigungssignal an die Ventilsteuerung ausgeben muss. Die Ventilsteuerung erhöht in der Folge die Durchflussmenge des Flutventils, so dass das nächste Belüften mit einer höheren Durchflussmenge erfolgt. Sinnvoll ist es, die Durchflussmenge nur schrittweise von Belüften zu Belüften zu erhöhen, so dass ein zu schnelles Fluten vermieden wird.

Um zu starke Änderungen von einem zum nächsten Belüften zu vermeiden, ist es sinnvoll, eine Berechnungseinheit vorzusehen, der die Zeitwerte nacheinanderfolgender oder statistisch verteilter Belüftungsvorgänge vom Zeitmesser an die Berechnungseinheit übergeben werden. Diese legt die Zeitwerte in einem Zeitwertspeicher ab und berechnet beispielsweise den Mittelwert aus mehreren Zeiten, um diesen dann dem Zeitvergleicher als Referenzwert zur Verfügung zu stellen.

Die durch die Ventilsteuerung bewirkte Änderung der Durchflussmenge kann nach den Beispielen gemäß Fig. 3 gestaltet sein. In diesem Diagramm ist der Öffnungsgrad eines Flutventils der Ventilanordnung über der Zeit angegeben.

Eine Möglichkeit ist, dass Flutventil mit Pulsen 300 der Zeitdauer t_{D} zu öffnen. Während eines Fluttaktes t_{T} ist das Flutventil für die Dauer t_{D} geöffnet. Die restliche Zeit t_{T}-t_{D} ist es geschlossen. Die Fluttakte werden mindestens bis zum Erreichen des Zeitpunkts t₃ wiederholt. Um das Belüften zu beschleunigen wird in nacheinanderfolgenden Flutvorgängen die Länge t_{D} der Pulse erhöht.

Eine weitere Möglichkeit ist, dass Flutventil zwar durchgängig zu Öffnen, dabei jedoch den Öffnungsgrad bzw. den Leitwert zu verändern. In Fig. 3 ist ein erster Leitwert L₁ eingezeichnet, der eine konstante Öffnung des Flutventils nach Verlauf 301 bewirkt. Eine langsamere Flutzeit kann bewirkt werden, in dem der Leitwert auf den niedrigeren Wert L₂ abgesenkt wird, so dass sich der Verlauf 302 ergibt.

Weiterhin ist es möglich, diese Ansteuerungsformen zu mischen, d.h. die Länge und Leitwert von Pulsen zu beeinflussen.

Umfasst die Ventilanordnung mehr als ein Flutventil, kann die Durchflussmenge durch Öffnen zusätzlicher Ventile erhöht werden. Auch die weiteren Ventile können getaktet werden oder einen veränderbaren Leitwert besitzen.

Der Benutzer kann über das Bedienelement 64 das Verfahren durch Wählen eines Parameters beeinflussen. Dieser Parameter betrifft das Belüften selbst, beispielsweise durch die Auswahl eines "schnellen, mittleren, langsamen" Flutens. Alternativ beschreibt es die Anordnung charakterisierende Größen, etwa Leitwert, Vorvakuumdruck, Kennzahlen, die vorher definierte Vorpumpen, und ähnliche Größen.

In einer vorteilhaft einfachen Weiterbildung ist dieser Parameter das zu evakuierende Volumen, welches der Benutzer eingibt. Dies kann als Zahlenwert oder als Auswählen eines Größenbereichs erfolgen. Mit diesem Startwert wird ein Belüftungsvorgang durchgeführt und im Vergleich geprüft, ob das Belüften zu schnell oder zu langsam erfolgte. Die Ventilsteuerung ändert erhöht oder verringert dann, je nach Vergleichsergebnis, die Durchflussmenge des Flutventils.

## Patentansprüche

1. Verfahren zum Belüften einer Vakuumpumpe (10) mit schnelldrehendem Rotor (12) durch Einlassen eines Gases bei ausgeschaltetem Antrieb des Rotors,
**dadurch gekennzeichnet, dass**
unter Bewertung einer Zeitmessung, in welcher während zumindest eines Belüftungsvorgangs die Zeitspanne (t_{F}) für eine durch das eingelassene Gas bewirkte Drehzahlverringung von einem ersten Wert (fo) auf einen zweiten Wert (f_{U}) ermittelt wird,
die Durchflussmenge einer wenigstens ein Flutventil (261, 262) umfassenden Ventilanordnung (26) für die Durchführung zumindest eines nachfolgenden Belüftungsvorganges eingestellt wird.

2. Verfahren nach Anspruch 1,
**dadurch gekennzeichnet, dass**
- in der Zeitmessung die Zeitspanne (t_{F}) zur Bildung eines Zeitwerts bestimmt wird,
- die Bewertung den Vergleich des Zeitwerts mit einem Referenzwert (54) zur Bildung eines Vergleichsergebnisses umfasst und
- die Durchflussmenge des Flutventils (261, 262) abhängig vom Vergleichsergebnis eingestellt wird.

3. Verfahren nach Anspruch 1 oder 2,
**dadurch gekennzeichnet, dass**
die Durchflussmenge vor Beginn des Belüftens über ein Bedienelement (64) eingestellt wird.

4. Verfahren nach einem der vorhergehenden Ansprüche,
**dadurch gekennzeichnet, dass**
die Durchflussmenge vor Beginn des Belüftens anhand eines wählbaren Parametersatzes (68) eingestellt wird.

5. Verfahren nach Anspruch 4,
**dadurch gekennzeichnet, dass**
der Parameter ein zu evakuierendes Volumen repräsentiert.

6. Verfahren nach einem der vorhergehenden Ansprüche,
**dadurch gekennzeichnet, dass**
ein Zeitwert aus bei mehreren Belüftungsvorgängen ermittelten Zeitspannen gebildet wird.

7. Verfahren nach einem der vorhergehenden Ansprüche,
**dadurch gekennzeichnet, dass**
die Durchflussmenge durch den Leitwert des Flutventils (261, 262) bestimmt wird.

8. Verfahren nach einem der vorhergehenden Ansprüche,
**dadurch gekennzeichnet, dass**
die Durchflussmenge durch eine Taktung des Flutventils (261, 262) bestimmt wird.

9. Anordnung mit einer Vakuumpumpe mit einem schnelldrehenden Rotor, insbesondere Turbomolekularpumpe (10),
**dadurch gekennzeichnet, dass**
die Anordnung dazu konfiguriert ist, ein Verfahren nach zumindest einem der Anprüche 1 bis 8 durchzuführen,
wobei die Vakuumpumpe umfasst:
- einen Flutzeitmesser (50) zum Bestimmen einer Zeitspanne (t_{F}) für die Drehzahlverringung von einem ersten Wert (fo) auf einen zweiten Wert (fᵤ) während zumindest eines Belüftungsvorgangs einer Belüftung durch Einlassen eines Gases bei ausgeschaltetem Antrieb des Rotors,
- einen Referenzwertspeicher, in welchem ein Referenzwert (54) abgelegt ist,
- einen Zeitvergleicher (52) zum Vergleichen der Zeitspanne mit dem Referenzwert und zum Bilden eines Vergleichsergebnisses, und
- einer Ventilsteuerung (30), die die Durchflussmenge einer wenigstens Flutventil (261, 262) umfassenden Ventilanordnung (26) abhängig vom Vergleichsergebnis für die Durchführung zumindest eines nachfolgenden Belüftungsvorganges einstellt.

10. Anordnung nach Anspruch 9,
**dadurch gekennzeichnet, dass**
sie einen Berechnungseinheit (60) umfasst, die aus mehreren Zeitspannen ein Ergebnis als Eingangsgröße für den Zeitvergleicher errechnet.

11. Anordnung nach einem der Ansprüche 9 oder 10,
**dadurch gekennzeichnet, dass**
die Ventilsteuerung (30) das Flutventil (261, 262) getaktet ansteuert, so dass die Durchflussmenge durch die Taktung eingestellt wird.

12. Anordnung nach einem der Ansprüche 9 oder 10,
**dadurch gekennzeichnet, dass**
das Flutventil (261, 262) einen einstellbaren Leitwert besitzt.

13. Anordnung nach einem der Ansprüche 9 bis 12,
**dadurch gekennzeichnet, dass** sie ein Bedienelement (64) zum Wählen eines die Durchflussmenge bestimmenden Parametersatzes (68) umfasst.

## Claims

1. A method of venting a vacuum pump (10) having a fast-rotating rotor (12) by admitting a gas when a drive of the rotor is switched off,
**characterized in that**
the throughflow quantity of a valve arrangement (26) comprising at least one venting valve (261, 262) for the carrying out of at least one subsequent venting procedure is set while assessing a time measurement in which the time period (t_{F}) for a rotational speed reduction from a first value (f_{O}) to a second value (f_{U}) is determined during at least one venting procedure, said rotational speed reduction being effected by the admitted gas.

2. A method in accordance with claim 1,
**characterized in that**
- the time period (t_{F}) for forming a time value is determined in the time measurement;
- the assessment comprises the comparison of the time value with a reference value (54) for forming a comparison result; and
- the throughflow quantity of the venting valve (261, 262) is set in dependence on the comparison result.

3. A method in accordance with claim 1 or claim 2,
**characterized in that**
the throughflow quantity is set via an operating element (64) before the start of the venting.

4. A method in accordance with any one of the preceding claims,
**characterized in that**
the throughflow quantity is set with reference to a selectable parameter set (68) before the start of the venting.

5. A method in accordance with claim 4,
**characterized in that**
the parameter represents a volume to be evacuated.

6. A method in accordance with any one of the preceding claims,
**characterized in that**
a time value is formed from time periods determined in a plurality of venting procedures.

7. A method in accordance with any one of the preceding claims,
**characterized in that**
the throughflow quantity is determined by the admittance of the venting valve (261, 262).

8. A method in accordance with any one of the preceding claims,
**characterized in that**
the throughflow quantity is determined by a clocking of the venting valve (261, 262).

9. An arrangement comprising a vacuum pump having a fast-rotating rotor, in particular a turbomolecular pump (10),
**characterized in that**
the arrangement is configured to carry out a method in accordance with at least one of the claims 1 to 8,
with the vacuum pump comprising:
- a venting timer (50) for determining a time period (t_{F}) for the rotational speed reduction from a first value (f_{O}) to a second value (f_{U}) during at least one venting procedure of a venting process by admitting a gas when the drive of the rotor is switched off;
- a reference value memory in which a reference value (54) is stored;
- a time comparator (52) for comparing the time period with the reference value and for forming a comparison result; and
- a valve control (30) which sets the throughflow quantity of a valve arrangement (26) comprising at least one venting valve (261, 262) in dependence on the comparison result for the carrying out of at least one subsequent venting procedure.

10. An arrangement in accordance with claim 9,
**characterized in that**
it comprises a calculation unit (60) which calculates a result from a plurality of time periods as an input value for the time comparator.

11. An arrangement in accordance with one of the claims 9 or 10,
**characterized in that**
the valve control (30) controls the venting valve (261, 262) in a clocked manner such that the throughflow quantity is set by the clocking.

12. An arrangement in accordance with one of the claims 9 or 10,
**characterized in that**
the venting valve (261, 262) has an admittance which can be set.

13. An arrangement in accordance with any one of the claims 9 to 12,
**characterized in that**
it comprises an operating element (64) for selecting a parameter set (68) which determines the throughflow quantity.

## Revendications

1. Procédé d'aération d'une pompe à vide (10) à rotor (12) tournant rapidement, par admission d'un gaz lorsque l'entraînement du rotor est coupé,
**caractérisé en ce que**
lors d'une évaluation d'une mesure de temps dans laquelle, pendant au moins une opération d'aération, on détermine la période temporelle (t_{F}) d'une réduction de la vitesse de rotation, provoquée par le gaz admis, pour passer d'une première valeur (fo) à une seconde valeur (fu),
on règle le débit quantitatif d'un agencement de vanne (26) comportant au moins une vanne d'admission (261, 262) pour mettre en oeuvre au moins une opération d'aération qui suit.

2. Procédé selon la revendication 1,
**caractérisé en ce que**
- pendant la mesure de temps, on détermine la période temporelle (t_{F}) pour former une valeur temporelle,
- l'évaluation inclut la comparaison de la valeur temporelle à une valeur de référence (54) pour former un résultat de comparaison, et
- on règle le débit quantitatif de la vanne d'admission (261, 262) en fonction du résultat de comparaison.

3. Procédé selon la revendication 1 ou 2,
**caractérisé en ce que**
avant de commencer l'aération, on règle le débit quantitatif par un élément de manoeuvre (64).

4. Procédé selon l'une des revendications précédentes,
**caractérisé en ce que**
avant de commencer l'aération, on règle le débit quantitatif en se basant sur un ensemble de paramètres (68) sélectionnable.

5. Procédé selon la revendication 4,
**caractérisé en ce que**
le paramètre représente un volume à évacuer.

6. Procédé selon l'une des revendications précédentes,
**caractérisé en ce que**
on forme une valeur temporelle à partir de périodes temporelles déterminées lors de plusieurs opérations d'aération.

7. Procédé selon l'une des revendications précédentes,
**caractérisé en ce que**
on définit le débit quantitatif par la conductance de la vanne d'admission (261, 262).

8. Procédé selon l'une des revendications précédentes,
**caractérisé en ce que**
on définit le débit quantitatif par un cadencement de la vanne d'admission (261, 262).

9. Agencement comportant une pompe à vide à rotor tournant rapidement, en particulier une pompe turbomoléculaire (10),
**caractérisé en ce que**
l'agencement est configuré pour mettre en oeuvre un procédé selon l'une au moins des revendications 1 à 8,
la pompe à vide comprenant :
- un moyen de mesure de temps (50) pour déterminer, pendant au moins une opération d'aération par admission d'un gaz, la période temporelle (t_{F}) pour une réduction de la vitesse de rotation pour passer d'une première valeur (fo) à une seconde valeur (fu), l'entraînement du rotor étant coupé,
- une mémoire de valeur de référence dans laquelle est stockée une valeur de référence (54),
- un comparateur de temps (52) pour comparer la période temporelle à la valeur de référence et pour former un résultat de comparaison, et
- une commande de vanne (30) qui règle le débit quantitatif d'un agencement de vanne (26) comprenant au moins une vanne d'admission (261, 262) en fonction du résultat de comparaison pour la mise en oeuvre d'au moins une opération d'aération qui suit.

10. Agencement selon la revendication 9,
**caractérisé en ce que**
il comprend une unité de calcul (60) qui calcule à partir de plusieurs périodes temporelles un résultat à titre de grandeur d'entrée pour le comparateur de temps.

11. Agencement selon l'une des revendications 9 ou 10,
**caractérisé en ce que**
la commande de vanne (30) pilote avec cadencement la vanne d'admission (261, 262) de sorte que le débit quantitatif est réglé par le cadencement.

12. Agencement selon l'une des revendications 9 ou 10,
**caractérisé en ce que**
la vanne d'admission (261, 262) possède une conductance réglable.

13. Agencement selon l'une des revendications 9 à 12,
**caractérisé en ce que**
il comprend un élément de manoeuvre (64) pour sélectionner un ensemble de paramètres (68) qui définit le débit quantitatif.
